# EUROPEAN PATENT SPECIFICATION

(11) **EP 1 310 049 B1**
(45) Date of publication and mention of the grant of the patent: **06.07.2011**
(21) Application number: 01934034.8
(22) Date of filing: 10.05.2001
(51) Int. Cl.: H04B 7/005, H04B 7/26

(54) **POWER CONTROL IN RADIO SYSTEM**
LEISTUNGSREGELUNG IN EINEM FUNKSYSTEM
COMMANDE DE PUISSANCE DANS UN SYSTEME RADIO

(30) Priority: 12.05.2000 FI 20001142
(43) Date of publication of application: 14.05.2003
(73) Proprietor: Nokia Corporation, 02150 Espoo (FI)
(72) Inventor: LEHTINEN, Otto-Aleksanteri, 21200 Raisio (FI); PASSOJA, Kalle, FIN-41160 Tikkakoski (FI)
(74) Representative: Antila, Harri Jukka Tapani
(86) International application number: PCT/FI2001/000450
(87) International publication number: WO 2001/086834

(56) References cited:
- EP-A2- 0 923 202
- EP-A2- 0 948 221
- US-A- 607 086

## Description

### FIELD OF THE INVENTION

The invention relates to radio systems and particularly to power control in radio transmission between a base station in a radio system and a terminal in the coverage area of the base station.

### BACKGROUND OF THE INVENTION

In a radio system, power control refers to adjusting the transmission power of a radio transmission within a given range of variation. Power control is primarily needed to minimize interference caused to each other by terminals located within the coverage areas of base stations in a radio system and to optimize power consumption in terminals. The transmission power of both a base station in a radio network and a terminal in the coverage area of the base station can be adjusted. Transmission power can be adjusted for example in accordance with the principles of an open loop or a closed loop. For example, in the UMTS (Universal Mobile Telephony System) cellular radio system using code division multiple access (CDMA), the closed loop method is used in the downlink TDD (Time Division Duplex) mode, whereby a terminal uses a special power control command (TPC, Transmission Power Control) to state the need to adjust the power of a received transmission. In this case, the terminal can for example notify the base station that the following transmission should have a 1-dB higher power level than a recently received transmission. In uplink TDD in UMTS, the open loop power control principle is used, whereby the receiver, i.e. a terminal, knows which transmission power the base station used in transmitting the transmission, and, having measured the reception power, is able to deduce the attenuation on the radio path and, consequently, based on the reception power, adjust its transmission power utilizing the reciprocity of the link.

Services transferred in radio networks, such as mobile networks, require different quality characteristics of a radio transmission. For example, speech transfer does not need much bandwidth but is sensitive to the delay characteristics of the transmission. A video image, in turn, requires abundantly bandwidth, but the quality of the transmission is not as critical to the delay in the transmission as is speech. For example in the TDD mode in UMTS, bandwidth is allocated by allocating data transfer capacity to users in several timeslots of a transmission frame. In a prior art solution, downlink transmission power is the same for all user data transfer resources within one frame.

It is thus apparent that the prior art involves drawbacks. A downlink radio transmission does not take into account the different quality requirements since the transmission has the same transmission power in all the user's timeslots. The prior art does not either take into account the number of users or the variation of services in timeslots.

### BRIEF DESCRIPTION OF THE INVENTION

The object of the invention is to provide an improved method for power control in a radio system. This is achieved by the method for power control in a radio system to the described next. In the method, a radio transmission between a network part in the radio system and terminals located in the coverage area of the network part is transmitted in a frame, downlink transmission power being allocated in at least two timeslots to the terminals from timeslots determined by said frame. The method comprises producing the transmission power of a transmission to a terminal timeslot-specifically such that the power ratio of the transmission power of a radio transmission to the terminal in each timeslot and the interference power caused by transmissions to other terminals exceeds a threshold value set on the power ratio in the timeslot.

The invention also relates to a network part in a radio system, arranged to transmit radio traffic to terminals located in the coverage area of the network part in a frame, the network part being arranged to allocate downlink transmission power in at least two timeslots to a given terminal from timeslots determined by said frame. The network part is arranged to produce the transmission power of a transmission to a terminal timeslot-specifically such that the power ratio of the transmission power of a radio transmission to the terminal in each timeslot and the interference power caused by transmissions to other terminals exceeds a threshold value preset on the power ratio in the timeslot.

A radio system comprising a network part and one or more terminals in radio connection to the network part, radio traffic on the radio connection between the network part and the terminal being transmitted in a frame, the network part being arranged to allocate downlink transmission power in at least two timeslots to a given terminal from timeslots determined by said frame. The network part is arranged to produce the transmission power of a transmission to a terminal timeslot-specifically such that the power ratio of the transmission power of a radio transmission to the terminal in each timeslot and the interference power caused by transmissions to other terminals exceeds a threshold value preset on the power ratio in the timeslot.

Thus, the invention relates to a method and an apparatus for power control in a radio system. In the description of the invention, a radio system preferably refers to a mobile network, even though the invention is not restricted thereto. In the method, the transmission power of a downlink transmission of a network part in the radio system and terminals located in the coverage area of the network, i.e. a transmission from the network part to the terminals, is adjusted. In the description of the invention, a network part refers to an entity formed from one or more base stations and/or one or more base station controllers controlling a base station. The terminal is preferably a mobile station but may also be some other radio receiver and/or device provided with transmitter characteristics, such as a computer, domestic appliance or the like. In connection with UMTS, a terminal refers for example to a device comprising both TE (Terminal Equipment) and UE (User Equipment) functionalities.

The invention relates to radio systems in which at least two downlink data transfer resources can be allocated time-dividedly to each terminal. The invention preferably relates to a radio system that is a hybrid system using code division (CDMA) and time division (TDMA) multiple access methods, whereby a data transfer resource refers to a combination of a timeslot and a spreading code. Furthermore, the invention is preferably applied to a radio system using time division duplex (TDD) without, however, being restricted thereto, but the invention is also applicable to a radio system using frequency division duplex (FDD), provided it comprises TDMA type of characteristics, i.e. resources are allocated time-dividedly or discontinuously.

In a preferred embodiment of the invention, radio traffic is sent to a terminal in a frame, transmission power being allocated to the terminal in at least two timeslots from the timeslots determined by said frame. Before transmission, a threshold value for the quality of the connection is generated in the base station timeslot-specifically and terminal-specifically. Quality is determined for example as a power ratio P_{w}/Pᵢ, wherein P_{w} refers to the transmission power of a transmission addressed to a user in a timeslot and Pᵢ refers to the transmission powers of transmissions addressed to other users in said timeslot. The threshold value 0.10, for example, may be set on the power ratio, whereby the power P_{w} of a transmission addressed to a terminal is 1/10 of the entire transmission power of the timeslot. In an embodiment of the invention, the setting of the threshold value is affected by the service to be sent in the timeslot, for example such that the threshold value is higher for a data transmission than for a video image. In a preferred embodiment of the invention, the service class of the terminal affects the determination of the threshold value. In this case, for example, higher threshold values for the transmission power in a timeslot are set on a terminal subscriber who wants to be placed in a higher service class. Before the frame is sent, the base station equalizes the transmission powers of the frame based on traffic timed, i.e. scheduled, to the frame. The base station uses the scheduled traffic to equalize the transmission power of a transmission to the terminal such that the threshold value for the terminal in the timeslot is fulfilled. Said power level threshold value and estimates of scheduled traffic are an important tool when the radio network estimates if new terminals requesting connection can be offered the services desired by them.

In a preferred embodiment of the invention, the base station uses for transmission power determination, not only estimates of scheduled traffic, but also information obtained from the terminal, such as power control commands and measurement reports related to connection quality. In an embodiment of the invention, the downlink closed power control loop implemented by means of a power control command is implemented by the terminal measuring the signal-to-interference ratio in one such timeslot in which transmission power is allocated to the terminal and transmits a power control command in an uplink transmission to the base station, should power need to be adjusted. The need to adjust power can be determined in the terminal for example by comparing the signal-to-interference radio with the threshold value of the signal-to-interference ratio, which is received for example from the base station upon set-up of the connection or which is generated in the terminal. It is essential to the invention that the power control command related to one timeslot and received from the terminal is utilized in the base station for power control in all the timeslots in which transmission power is allocated to the terminal. In this case, one power control command can be used to handle several downlink resources in different timeslots. In an embodiment of the invention, the timeslot in which the measurements are made in the terminal is the last timeslot in the frame wherein transmission power is allocated to the terminal. The timeslot in which the measurements are made can also be signalled from the base station to the terminal upon set-up of the connection. Power control may continue in the base station based on measurement reports sent by the terminal. In an embodiment, the measurement report contains the measurement results of the signal-to-interference ratio of all timeslots of a previous frame.

The invention provides significant advantages in reducing interference in a radio network, since the transmission power of each timeslot is set separately, whereby transmission to all timeslots does not have to be at the same power level.

### BRIEF DESCRIPTION OF THE DRAWINGS

In the following, the invention will be described in detail in connection with preferred embodiments with reference to the accompanying drawings, in which
Figure 1 shows a mobile network,
Figure 2 is a method diagram of an embodiment of the method of the invention,
Figure 3 is a structural view of a data transfer frame,
Figure 4 shows an embodiment of the method of the invention,
Figure 5 shows a base station according to an embodiment of the invention.

### DETAILED DESCRIPTION OF THE INVENTION

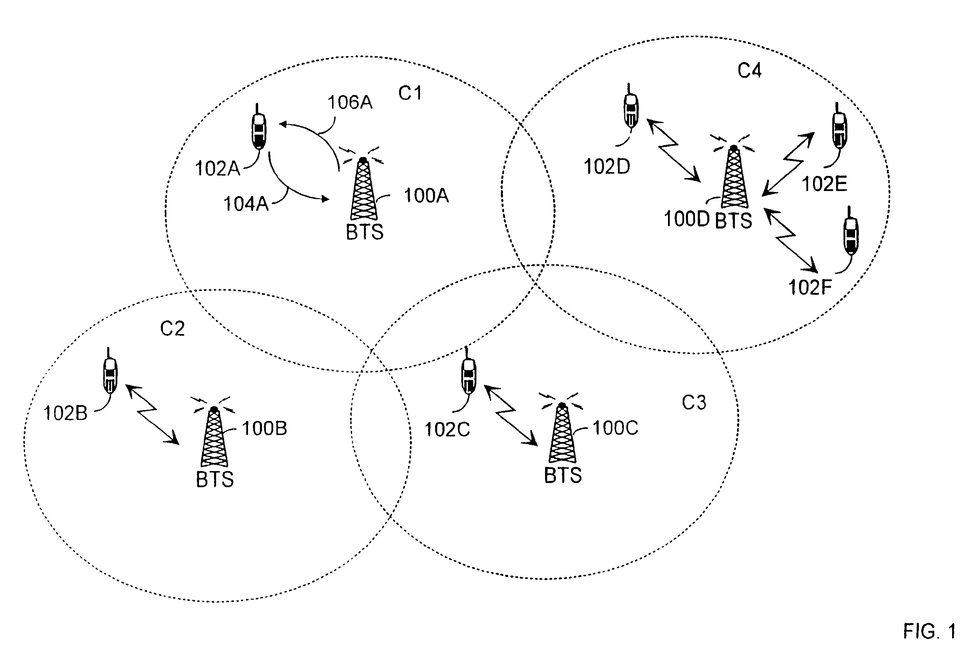

In the following, the invention will be described in detail in connection with preferred embodiments with reference to the attached figures 1 to 5. The description is based on a wideband UMTS system implemented with the direct sequence technique and employing the code division multiple access method, without, however, restricting the invention thereto. The invention is also preferably usable in other radio systems using for example a combination of the time and code division multiple access methods (TDMA/CDMA). The description of the invention is based on the TDD mode of the terrestrial radio network UTRAN of UMTS, operation being in one frequency band, wherein uplink and downlink utilize the same radio frequency but different timeslots in said frequency band. The invention is also usable in systems using FDD, wherein different frequency ranges are defined for uplink and downlink. In the following description, the term base station refers to an entity formed by one or more base stations and/or one or more base station controllers.

Figure 1 is a schematic view of a mobile system, i.e. a cellular radio system comprising base stations 100A to 100D. The coverage area of a base station is called a cell, which is denoted by C1 to C4 in the figure, corresponding to base stations 100A to 100D. Cells may overlap, such as cell C2 in the figure, which partly overlaps cells C1 and C3. The figure shows one or more receivers 102A to 102F in the area of each cell C1 to C4, the receivers being e.g. mobile stations, but they may be other apparatuses too, which are provided with radio receiver and/or transmitter characteristics and TE/UE functionality. In a radio network using the code division multiple access method (CDMA), such as a mobile network, all users use the same frequency band simultaneously. Users are distinguished from each other based on a spreading code by which the information sent by the user is multiplied. In this case, information, such as a bit stream containing speech, is spread into a wide frequency band. The bit rates of the spreading codes used are significantly higher then that of the data stream to be sent, e.g. 4, 8 or 16. The aim is to select orthogonal spreading codes for users, whereby they do not correlate. In practice, spreading codes are not completely orthogonal, and hence users interfere with each other's transmissions. Interference is caused for example to users communicating in the same timeslot and being located in the same cell or in adjacent cells. The transmission of a user communicating in an adjacent timeslot may also be interfered with. In Figure 1, receivers 102D to 102F in cell C4 interfere with one another and experience interference from terminals 102A to 102C located in the areas of the other cells C1 to C3. Additional interference between terminals 102A to 102F is caused by the signal transmitted by each terminal propagating along several different paths to the receiver. Due to this multipath propagation, a user signal arrives at the receiver as signal components delayed in several different ways thus causing interference to other users.

Figure 1 shows a bi-directional radio link 104A to 106A between terminal 102A and base station 100A in cell C1. Transmission from terminal 102A to base station 100A is called uplink 104A and transmission from base station 100A to terminal 102A downlink 106A. In the TDD mode of UMTS, the power of a radio transmission of terminals 102A to 102F and base stations 100A to 100D is adjusted in downlink using a closed loop and in uplink using an open loop. Downlink closed loop power control means that terminal 102A sends a power control command to the base station, based on which base station 100A adapts its transmission to terminal 102A. Uplink open loop power control, in turn, means that terminal 102A measures the transmission power of a transmission received from base station 100A, uses the reception power to deduce the propagation loss and, based on this, adjusts the uplink transmission power to optimal.

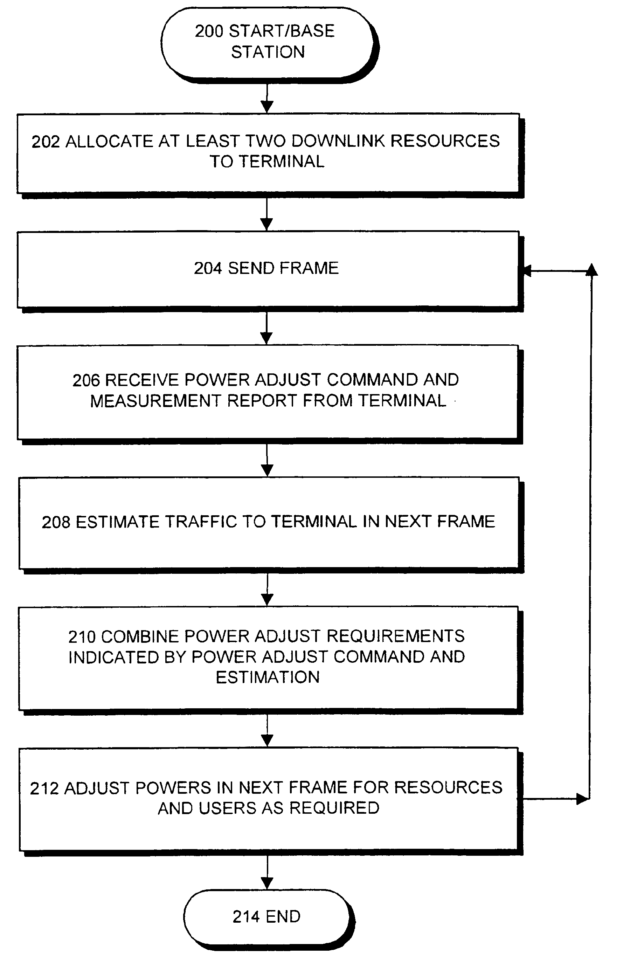

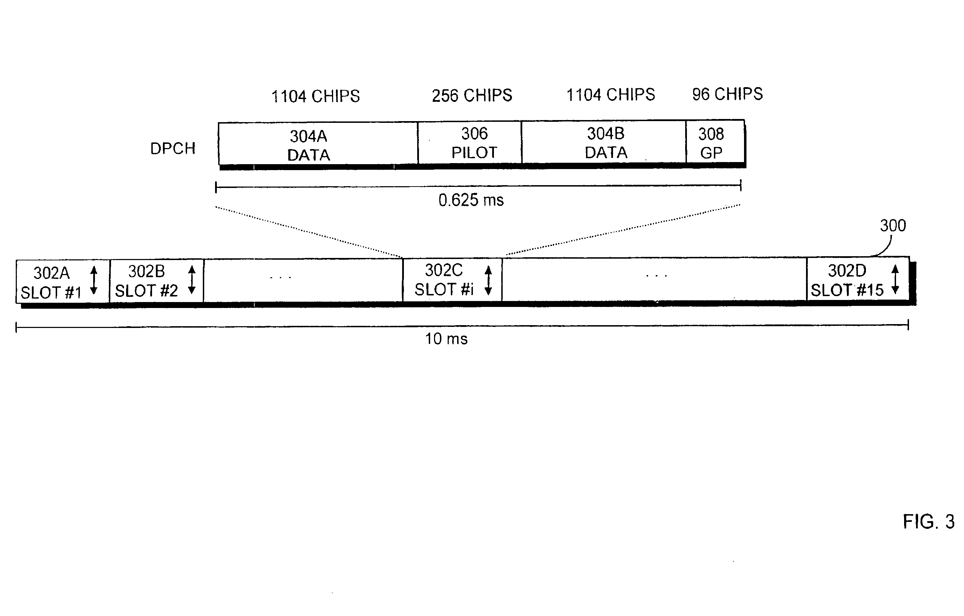

Figure 2 describes an embodiment of the method of the invention. In the initial method step, a terminal is within the coverage area of a base station and requests a data transfer connection, or, alternatively, the base station requests connection set-up from the terminal. In accordance with step 202, the connection to be set up is such that at least two downlink data transfer resources are allocated. In the TDD mode of UMTS, for example, this would mean that a downlink data transfer frame to be transmitted from the base station, at least two time-dividedly spread data transfer resources are reserved for the terminal. Spreading codes are preferably allocated to different timeslots of the frame, but may be in the same timeslot. Since services requiring different quality characteristics may be transferred in the resources to be allocated, the quality criteria set on the different resources may differ from each other. Services are allocable to timeslots for example by transferring services requiring similar quality characteristics in timeslots. This allows a quality criterion to be preferably set for a timeslot, for example such that the desired transmission power P_{w} of the timeslot is to be at least 5% of the power Pᵢ allocated to other users in the timeslot. In method step 204, the base station sends to terminals within its coverage area a data transfer frame whose structure is described in detail in Figure 3. In method step 206, the base station receives a power adjust command and/or a measurement report on the quality of the connection from the terminal. Said power adjust command is separately received at the base station, for example by receiving the power adjust command in connection with an uplink timeslot of a traffic channel, whereas measurement reports are preferably sent on control channels. A power adjust command is preferably based on a given timeslot that is known in both the base station and the terminal. In a preferred embodiment, the timeslot to which the power adjust command sent by the terminal relates is the last timeslot in a frame from which transmission power is allocated to the terminal. Furthermore, in an embodiment, the base station sends an indication to the terminal about the timeslot concerning which the power adjust command is to be sent in closed loop power control. In a measurement report concerning a radio link, the terminal sends for example signal-to-noise ratios experienced in all timeslots of a frame.

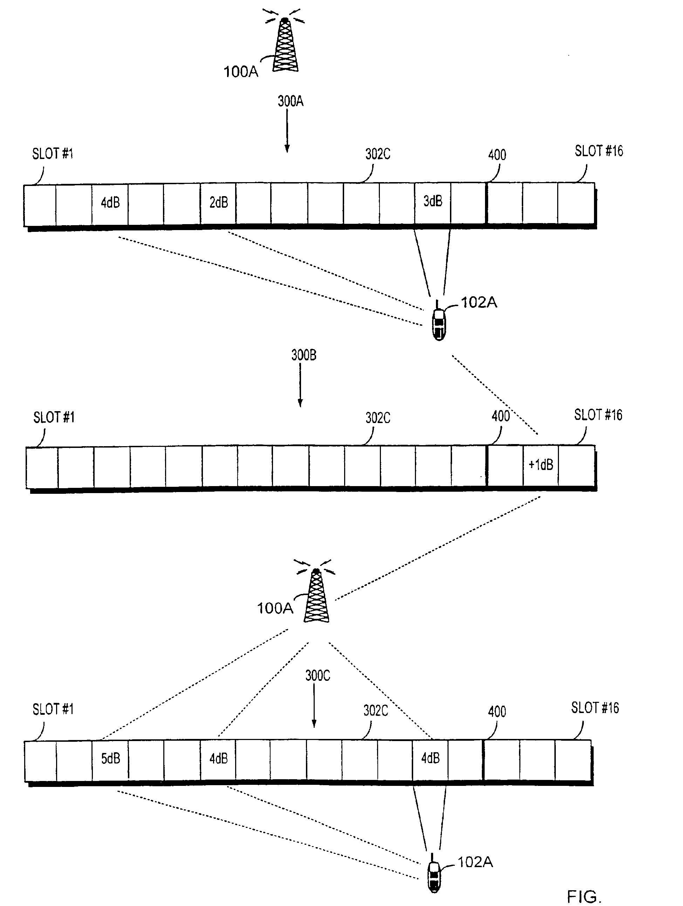

In method step 208 in Figure 2, the traffic of the frame to be sent next is estimated at the base station. As regards a given terminal, this means for example that in each timeslot, the power ratio P_{w}/pᵢ exceeds a base station threshold value preset for the timeslot. For example, the service to be sent in the timeslot affects the base station threshold value of the timeslot. In method step 210, the power change requirements created by the power adjust command and the estimate of traffic carried out in method step 208 are combined. Power adjustment requirements can be combined in several ways, and the invention is not restricted to one manner of combination. An example is, for example, that the power adjustment requirements caused by the estimation are created first, and the power adjust commands sent by the terminal are added to them or subtracted from them. In a second preferred embodiment, the power adjust commands sent by the terminal are primarily taken into account, and the power adjustment requirements caused by the estimation are then taken care of, if need be. However, as far as the invention is concerned, it is essential that one power control command per frame be received at the base station. The received power control command is extended to cover all those timeslots in the frame to be sent next, in which resources are allocated to the terminal. For example, power control command +1 dB received at the base station related to timeslot 5, but the +1-dB power control is carried out on all timeslots, e.g. 3, 4 and 5, in which transmission power is reserved for the terminal. This power control is described in detail in connection with Figure 4. The actual power control is carried out in method step 212 before the next frame is sent by returning to step 204.

In digital radio systems, the radio interface between a terminal and a base station is implemented with logical radio channels, which are physically implemented by means of physical radio channels. Logical channels can be divided into dedicated and common channels, dedicated channels being reserved particularly for communication between a given terminal and base station. An example of a dedicated channel is a dedicated traffic channel DCH (Dedicated Channel). A common channel is used for example to transfer information from a base station to several terminals at the same time. Examples of common channels include BCCH (Broadcast Channel), which is used for downlink transfer of information about a cell to terminals; PCCH (Paging Channel), which is used to request location data from a terminal when the system is not aware of the location of the terminal; RACH (Random Access Channel), which a terminal can be used for uplink transfer of control information for example relating to the set-up of a connection.

Logical channels are implemented with physical channels, whose implementation in a TDMA-based system is a timeslot and a burst to be sent in the timeslot. The frame and burst structures used on physical channels differ depending on the physical channel the transmission takes place on. The frame structure of a physical channel of the TDD mode DPCH (Downlink Dedicated Physical Channel) of UMTS will be described by way of example with reference to Figure 3. The transmission duration of frame 300 is 10 milliseconds and it is divided into 15 timeslots 302A to 302D, each timeslot, e.g. 302C, having a duration in time of 0.666 milliseconds. Each timeslot 302A to 302D can be allocated simultaneously to several different users who are distinguished from each other by spreading codes. Each timeslot 302A to 302D of a frame can be allocated for either uplink or downlink transmission, which is illustrated by two-headed arrows in timeslots 302A to 302D. However, in each frame preferably at least one timeslot is allocated to the uplink and one to the downlink transmission direction. A data packet to be sent in timeslots 302A to 302D is called a burst, which comprises 2560 chips, i.e. units of the spreading code used. The bursts in one timeslot can be addressed to different users according to spreading codes, but they can also all be addressed to the same user. Eight bursts belonging to different users can be placed in one uplink timeslot. Nine or ten bursts can be placed in one downlink timeslot. In a DPCH burst according to Figure 3, chips 0 to 1103 contain a first data partition 304A, chips 1104 to 1359 contain a midamble 306, chips 1360 to 2463 a second data partition 304B and at the end of the burst is a 96-chip long guard period 308. The TPC is placed in the middle of midamble 306 and the second data partition 304B, if it is used on the connection. A burst including the described contents is usable for example on a downlink channel. The middle of a burst used on an uplink channel is usually longer in order to facilitate the sorting of bursts coming to a base station from different users and to identify interference caused on the radio path.

Figure 4 illustrates the efficiency of the method of the invention in practice. Uppermost in the figure is frame 300A, which is sent from base station 100A to terminals communicating with it, such as terminal 102A. Frame 300A is composed of 16 timeslots, of which timeslots 1 to 13 are reserved for downlink and timeslots 14 to 16 above duplex limit 400 to uplink. Transmission power is allocated to terminal 102A from timeslots 3, 6 and 12. Different services, for example, are sent in said timeslots, whereby the target values set on the signal-to-interference ratio SIR of the timeslots are different. In measuring the SIR, the terminal measures the signal power of a transmission directed to a terminal to the power of a interfering signal, i.e. the power of transmissions directed to other users. It is apparent that the same service, such as speech, video image or the like, can be addressed to a terminal in the timeslots, and yet the SIR target values of the timeslots are different. In a preferred embodiment of the invention, a base station and a terminal communicate on a control cannel a SIR target value and the timeslot the target value relates to. The measurement can also be carried out without separate notification from base station 100A for example such that it is always the last timeslot in which transmission power is allocated to the terminal. This is the situation for example in Figure 4, wherein terminal 102A measures timeslot 13. In the example of Figure 4, while measuring timeslot 13, terminal 102A notices that the ratio of signal power to interference power is only 2 dB, although the SIR target is 3 dB. In this case, terminal 102A sends a request to increase the transmission power of the timeslot by +1 dB in the next uplink timeslot 15, which belongs to frame 300B. In the TDD mode of UMTS, the terminal sends the power adjust command in a TPC indicator (Transmission Power Control). Base station 100A receives timeslot 15 belonging to frame 300B and adjusts the transmission power to be transmitted to the terminal by +1 dB in the next frame 300C in all timeslots 3, 6 and 13 to be sent to the terminal. According to an embodiment of the inventive idea of the present invention, base station 100A thus adjusts transmission power in all timeslots of terminal 102A based on the TPC value based on the measurements of one timeslot. In this case it should be noted that if the SIR experienced by the terminal in some timeslot changes, a significant reason for an impaired SIR is a change in the location of the terminal with respect to the base station, whereby the terminal is likely to experience similar weakening of the SIR also in other timeslots.

In a preferred embodiment of the invention, the terminal sends measurement reports on connection quality to the base station. A measurement report is sent for example once per each frame in those timeslots of the reported SIR, in which transmission power is allocated to the user. Furthermore, the interference level of each timeslot in a frame can be reported in the measurement reports. In a preferred embodiment, the base station uses the measurement reports for adjusting the power of the following frame(s). With reference to for example Figure 4, let us assume that terminal 102A is the only user in timeslots 3, 6 and 13 and sends to the base station a measurement report including interference levels 90 dBm, -120 dBm, -120 dBm, respectively. In this case, the base station preferably increases the power level of timeslot 3 more than the power ratio estimates and power control command indicate.

In an embodiment of the invention, base station 100A also estimates the relationship between transmission power and interference power based on estimated traffic. In practice, this means that, having sent frame 300A, base station 100A starts to keep a record of traffic that is to be sent in the next frame 300C. In the example of Figure 4, base station 100A notices in timeslot 6 that the power P_{w} of a transmission directed to terminal 102A has dropped too low with respect to the interference power Pᵢ, which refers to traffic predicted, i.e. scheduled to other terminals than terminal 102A. Since base station 100A already received a command to raise transmission power by +1 dB from terminal 102A, for example +1 dB more transmission power is enough to raise the power ratio P_{w}/Pᵢ to the desired level. In a preferred embodiment of the invention, the base station first evens out the ratio P_{w}/Pᵢ to the right level, such as to the level of a preset threshold value. A threshold value may for example determine that the power ratio is 0.10. The TPC command issued by a user is not taken into account until after the power ratio is calculated.

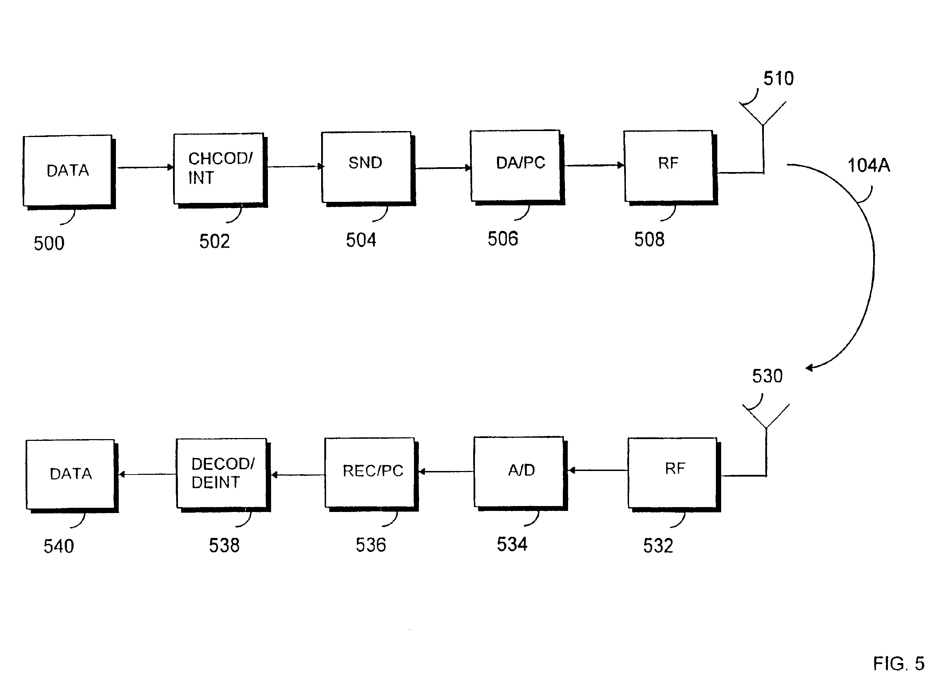

In the following, the invention will be described with reference to Figure 5, which shows the block diagram of a CDMA transmitter and receiver by means of an embodiment. The transmitter is shown by means of blocks 500-510 and the receiver by means of blocks 530-540. Since the radio connection between transmitter 500-510 and receiver 530-540 is bi-directional, in practice both the base station of the mobile network and the terminal act as transmitter and receiver. For the sake of clarity, Figure 5 only shows a situation wherein the base station acts as transmitter and the terminal, such as a mobile station, as receiver, i.e. downlink transmission. Data block 500 shows the hardware parts of the base station that are needed to generate user speech or data in the transmitter. In block 502, channel coding and interleaving, for example, are adapted to the information, composed of symbols. Channel coding and interleaving are used to ensure that the transmitted information can be restored in the receiver although not all information bits are received. Block 504 shows multiplication by spreading code and spreading into wideband performed on the information to be sent. Conversion from digital into analog form takes place in block 506. Before being converted into analog, a signal is subjected to power control. Power control is carried out for example such that the higher the transmission power used for sending a user signal, the higher the coefficient by which user signal chips are multiplied before a combination signal to be sent to radio path 104A is created. In unit 506, power levels of the user signal and interfering signals are compared with each other and with a threshold value, and, when threshold value comparison so indicates, the power level of the user signal is adjusted so that it fulfils the threshold value. After radio frequency parts 508, the combination signal is transferred by antenna parts 510 for transmission to downlink radio path 104A.

Figure 5 shows a CDMA receiver 530-540 comprising antenna parts 530 for receiving a wideband signal. From antenna 530, the signal is transferred to radio frequency parts 532, from where the signal is transferred to A/D converter 534 for conversion from analog to digital form. In receiver block 536, attempts are made to separate the user signal from the received CDMA signal. Separation takes place for example by composing symbol estimates from the user signal, and the symbol estimates can be improved by subjecting the information to one or more interference cancellation steps. In a preferred embodiment, receiver block 536 in for example a RAKE type of receiver comprises a delay estimator for estimating the delays of multipath-propagated components and allocating the strongest of them to RAKE branches. In receiver block 536, user signals are regenerated and combined into an interfering signal that can be subtracted from the received combination signal. Herein, the signal-to-interference ratio is also estimated in unit 534 by comparing the power level of the user signal with the power level of the interfering signal. Once final symbol estimates are generated from the signal, it is directed to block 538 for removal of deinterleaving and channel coding. User data is then directed in the receiver to data processing routines 540, which in the case of for example a mobile station means a handset for presenting speech to a user. It is apparent that the transmitter and the receiver also comprise other parts than those described above in connection with Figure 5, but their explanation is not relevant to describing the invention.

The invention is preferably implemented in a network part of a radio system using software, whereby for example base station 100A to 100D comprises a microprocessor, wherein the functionalities of the described method are implemented as software. It is apparent to a person skilled in the art that a network part can also refer to a disintegrated system, whereby the method steps are implemented in one or more base stations and/or base station controllers. The invention can also be implemented for example using hardware solutions providing the required functionality, e.g. as ASIC (Application Specific Integrated Circuit) or utilizing separate logics components.

Although the invention is described above with reference to examples according to the accompanying drawings, it is apparent that the invention is not limited thereto, but can be modified in a variety of ways within the scope of the inventive idea disclosed in the attached claims.

## Claims

1. A method for power control in a radio system, in which method (202 to 204) a radio transmission between a network part in the radio system and terminals located in the coverage area of the network part is transmitted in a frame, downlink transmission power being allocated in at least two timeslots to the terminals from timeslots determined by said frame,
**characterized by**
(208 to 212) producing the transmission power of a transmission to a terminal timeslot-specifically such that the power ratio of the transmission power of a radio transmission to the terminal in each timeslot and the interference power caused by transmissions to other terminals exceeds a threshold value set on the power ratio in the timeslot.

2. A method as claimed in claim 1, **characterized by** the network part comprising one or more of the following: one or more base stations, one or more base station controllers.

3. A method as claimed in claim 1, **characterized by** the threshold value set on the power ratio being determined based on the service to be sent in the timeslot.

4. A method as claimed in claim 1, **characterized by** the threshold value set on the power ratio being determined based on the service class of the terminal.

5. A method as claimed in claim 1, **characterized by** measuring the signal strength of a transmission addressed to a terminal and the interfering signal strength of the timeslot in the terminal in a timeslot in which transmission power is allocated to the terminal;
creating the signal-to-interference ratio of signal strength to interfering signal strength in the terminal;
comparing the signal-to-interference ratio in the terminal with a preset threshold value, and if the signal-to-interference ratio is at least equal to the threshold value, sending a power adjust command from the terminal to the network part;
adjusting the transmission power of transmissions addressed to the terminal in the network part based on the power adjust command in all those timeslots of the next frame in which transmission power is allocated to the terminal.

6. A method as claimed in claim 5, **characterized by** sending information from the network part to the terminal indicating in which timeslot the signal-to-interference ratio is to be measured.

7. A method as claimed in claim 1, **characterized by** the radio system being a radio system using the code division multiple access method (CDMA), wherein the transmissions of different terminals in a timeslot are separated based on individual spreading codes allocated to the terminals.

8. A method as claimed in claim 1, **characterized by** the uplink and downlink transmission directions being separated from one another in the radio system using time division duplex (TDD).

9. A method as claimed in claim 1, **characterized by** sending a measurement report on the signal-to-interference ratio (SIR) from the terminal to the network part regarding all timeslots in which transmission power is allocated to the terminal;
using the measurement report received from the terminal in the network part in determining the transmission power of the transmission of the frame to be sent next and directed to the terminal.

10. A network part (100A to 100D) in a radio system, arranged to transmit radio traffic to terminals (102A to 102F) located in the coverage area of the network part (100A to 100D) in a frame (300), the network part (100A to 100D) being arranged to allocate downlink transmission power in at least two timeslots (302A to 302D) to a given terminal (102A) from timeslots determined by said frame (300),
**characterized in that**:
the network part (100A to 100D) is arranged to produce the transmission power of a transmission to a terminal (102A to 102F) timeslot-specifically such that the power ratio of the transmission power of a radio transmission to the terminal (102A to 102F) in each timeslot (302A to 302D) and the interference power caused by transmissions to other terminals (102A to 102F) exceeds a threshold value preset on the power ratio in the timeslot (302A to 302D).

11. A network part as claimed in claim 10, **characterized in that** the network part comprises one or more of the following: one or more base stations, one or more base station controllers.

12. A network part as claimed in claim 10, **characterized in that** the network part is arranged to determine the threshold value set on the power ratio based on the service to be sent in the timeslot.

13. A network part as claimed in claim 10, **characterized in that** the network part is arranged to determine the threshold value set on the power ratio based on the service class of the terminal.

14. A network part as claimed in claim 10, **characterized in that**:
the network part is arranged to receive a power adjust command from the terminal, related to one such timeslot in which transmission power is allocated to the terminal;
the network part is arranged to use the power adjust command to adjust the transmission power of transmissions directed to the terminal in all those timeslots of the next frame wherein transmission power is allocated to the terminal.

15. A network part as claimed in claim 14, **characterized in that** the network part is arranged to send information to the terminal about the timeslot of the frame wherein the power ratio will be measured.

16. A network part as claimed in claim 10, **characterized in that** the radio system is a radio system using the code division multiple access method, wherein the transmissions of different terminals in a timeslot are separated based on individual spreading codes allocated to the terminals.

17. A network part as claimed in claim 10, **characterized in that** the uplink and downlink transmission directions are separated from one another in the radio system using time division duplex (TDD).

18. A network part as claimed in claim 10, **characterized in that** the network part is arranged to receive a measurement report on the signal-to-interference ratio (SIR) from the terminal regarding all timeslots in which transmission power is allocated to the terminal;
the network part is arranged to use the measurement report received from the terminal in determining the transmission power of the transmission of the frame to be sent next and directed to the terminal.

19. A radio system comprising a network part (100A to 100D) and one or more terminals (102A to 102F) in radio connection to the network part (100A to 100D), radio traffic on the radio connection between the network part (100A to 100D) and the terminal (102A to 102F) being transmitted in a frame (300), the network part (100A to 100D) being arranged to allocate downlink transmission power in at least two timeslots (302A to 302D) to a given terminal (1 02A to 102F) from timeslots (302A to 302D) determined by said frame (300), **characterized in that**:
the network part (100A to 100D) is arranged to produce the transmission power of a transmission to a terminal (102A to 102F) timeslot-specifically such that the power ratio of the transmission power of a radio transmission to the terminal (102A to 102F) in each timeslot (302A to 302D) and the interference power caused by transmissions to other terminals (102A to 102F) exceeds a threshold value preset on the power ratio in the timeslot (302A to 302D).

20. A radio system as claimed in claim 19, **characterized in that** the network part comprises one or more of the following: one or more base stations, one or more base station controllers.

21. A radio system as claimed in claim 19, **characterized in that** the network part is arranged to determine the threshold value set on the power ratio based on the service to be sent in the timeslot.

22. A radio system as claimed in claim 19, **characterized in that** the network part is arranged to determine the threshold value set on the power ratio based on the service class of the terminal.

23. A radio system as claimed in claim 19, **characterized in that**:
the terminal is arranged to measure, in a timeslot in which transmission power is allocated to the terminal, the signal strength of a transmission directed to the terminal and the interfering signal strength of the timeslot;
the terminal is arranged to measure the signal-to-interference ratio of signal strength to interfering signal strength;
the terminal is arranged to compare the signal-to-interference ratio with a preset threshold value, and if the signal-to-interference ratio is at least equal to the threshold value, to send a power adjust command to the network part;
the network part is arranged to adjust the transmission power of transmissions addressed to the terminal based on the power adjust command in all those timeslots of the next frame in which transmission power is allocated to the terminal.

24. A radio system as claimed in claim 23, **characterized in that** the network part is arranged to send information to the terminal and the terminal is arranged to receive information from the network part indicating in which timeslot the signal-to-interference ratio is to be measured.

25. A radio system as claimed in claim 19, **characterized in that** the radio system is a radio system using the code division multiple access method, wherein the transmissions of different terminals in a timeslot are separated based on individual spreading codes allocated to the terminals.

26. A radio system as claimed in claim 19, **characterized in that** the uplink and downlink transmission directions are separated from one another in the radio system using time division duplex (TDD).

27. A radio system as claimed in claim 19, **characterized in that** the network part is arranged to receive a measurement report on the signal-to-interference ratio (SIR) from the terminal regarding all those timeslots in a frame in which transmission power is allocated to the terminal;
the network part is arranged to use the measurement report received from the terminal in determining the transmission power of the transmission of the frame to be sent next and directed to the terminal.

## Patentansprüche

1. Verfahren zur Leistungssteuerung in einem Funksystem, bei welchem Verfahren (202 bis 204) eine Funkübertragung zwischen einem Netzwerkteil im Funksystem und im Erfassungsbereich des Netzwerkteils liegenden Endgeräten in einem Frame übertragen wird, wobei die Downlink Übertragungsleistung in mindestens zwei Timeslots den Endgeräten aufgrund den durch den Frame bestimmten Timeslots zugewiesen wird,
**gekennzeichnet durch**
(208 bis 212) timeslotspezifisches Erzeugen der Übertragungsleistung einer Übertragung an ein Endgerät derart, dass das Leistungsverhältnis der Übertragungsleistung einer Funkübertragung an das Endgerät in jedem Timeslot zu der **durch** Übertragungen an andere Endgeräte verursachten Interferenzleistung einen in dem Timeslot für das Leistungsverhältnis eingestellten Schwellenwert überschreitet.

2. Verfahren nach Anspruch 1, **dadurch gekennzeichnet, dass** das Netzwerkteil umfasst: eine oder mehrere Basisstationen, eine oder mehrere Basisstationsteuerungen.

3. Verfahren nach Anspruch 1, **dadurch gekennzeichnet, dass** der für das Leistungsverhältnis eingestellte Schwellenwert aufgrund des in dem Timeslot zu sendenden Dienstes bestimmt wird.

4. Verfahren nach Anspruch 1, **dadurch gekennzeichnet, dass** der für das Leistungsverhältnis eingestellte Schwellenwert aufgrund der Dienstklasse des Endgeräts bestimmt wird.

5. Verfahren nach Anspruch 1, **gekennzeichnet durch**
Messen der Signalstärke einer an ein Endgerät adressierten Übertragung und der Interferenzsignalstärke des Timeslots im Endgerät in einem Timeslot, in dem die Übertragungsleistung dem Endgerät zugewiesen wird;
Erzeugen des Signal-Interferenz-Verhältnisses Signalstärke zu Interferenzsignalstärke im Endgerät;
Vergleichen des Signal-Interferenz-Verhältnisses im Endgerät mit einem voreingestellten Schwellenwert, und wenn das Signal-Interferenz-Verhältnis mindestens gleich des Schwellenwertes ist, Senden eines Leistungsanpassbefehls vom Endgerät an das Netzwerkteil; Anpassen der Übertragungsleistung der an das Netzwerkteil adressierten Übertragungen im Netzwerkteil aufgrund des Leistungsanpassbefehls in denjenigen Timeslots des nächsten Frames, in denen die Übertragungsleistung dem Endgerät zugewiesen wird.

6. Verfahren nach Anspruch 5, **gekennzeichnet durch** Senden von Information vom Netzwerkteil an das Endgerät unter Angabe des Timeslots, in dem das Signal-Interferenz-Verhältnis gemessen werden soll.

7. Verfahren nach Anspruch 1, **dadurch gekennzeichnet, dass** das Funksystem ein Funksystem ist, welches das CDMA Verfahren (CDMA = Code Division Multiple Access) benutzt, wobei die Übertragungen verschiedener Endgeräte in einem Timeslot auf Basis von den Endgeräten zugewiesenen individuellen Spreizcodes getrennt werden.

8. Verfahren nach Anspruch 1, **dadurch gekennzeichnet, dass** die Uplink und Downlink Übertragungsrichtungen im Funksystem durch Zeitteilungsduplex (TDD) von einander getrennt werden.

9. Verfahren nach Anspruch 1, **gekennzeichnet durch** Senden eines Messberichts über das Signal-Interferenz-Verhältnis (SIR) vom Endgerät an das Netzwerkteil, betreffend alle Timeslots, in denen dem Endgerät eine Übertragungsleistung zugewiesen wird;
Einsetzen des vom Endgerät im Netzwerkteil empfangenen Messberichts zum Bestimmen der Übertragungsleistung der Übertragung des nächsten zu sendenden und an das Endgerät gerichteten Frames.

10. Netzwerkteil (100A bis 100D) in einem Funksystem, das eingerichtet ist, Funkverkehr an Endgeräte (102A bis 102F) zu übertragen, die in einem Frame im Erfassungsbereich des Netzwerkteils (100A bis 100D) liegen, welches Netzwerkteil (100A bis 100D) eingerichtet ist, die Downlink Übertragungsleistung in mindestens zwei Timeslots (302A bis 302D) einem gegebenen Endgerät (102A) aufgrund der durch den Frame (300) bestimmten Timeslots zuzuweisen,
**dadurch gekennzeichnet, dass**
das Netzwerkteil (100A bis 100D) eingerichtet ist, die Übertragungsleistung einer Übertragung an ein Endgerät (102A bis 102F) timeslotspezifisch zu erzeugen, derart, dass das Leistungsverhältnis der Übertragungsleistung einer Funkübertragung an das Endgerät (102A bis 102F) in jedem Timeslot (302A bis 302D) zu der durch Übertragungen an andere Endgeräte (102A bis 102F) verursachten Interferenzleistung einen für das Leistungsverhältnis in dem Timeslot (302A bis 302D) eingestellten Schwellenwert überschreitet.

11. Netzwerkteil nach Anspruch 10, **dadurch gekennzeichnet, dass** das Netzwerkteil umfasst: eine oder mehrere Basisstationen, eine oder mehrere Basisstationsteuerungen.

12. Netzwerkteil nach Anspruch 10, **dadurch gekennzeichnet, dass** der für das Leistungsverhältnis eingestellte Schwellenwert aufgrund des in dem Timeslot zu sendenden Dienstes bestimmt wird.

13. Netzwerkteil nach Anspruch 10, **dadurch gekennzeichnet, dass** das Netzwerkteil eingerichtet ist, den für das Leistungsverhältnis eingestellten Schwellenwert aufgrund der Dienstklasse des Endgeräts zu bestimmen.

14. Netzwerkteil nach Anspruch 10, **dadurch gekennzeichnet, dass**
das Netzwerkteil eingerichtet ist, einen Leistungsanpassbefehl vom Endgerät zu empfangen, bezogen auf denjenigen Timeslot, in dem die Übertragungsleistung dem Endgerät zugewiesen wird;
das Netzwerkteil eingerichtet ist, den Leistungsanpassbefehl zum Anpassen der Übertragungsleistung der an das Endgerät gerichteten Übertragungen in den jenigen Timeslots des nächsten Frames zu benutzen, in denen die Übertragungsleistung dem Endgerät zugewiesen wird.

15. Netzwerkteil nach Anspruch 14, **dadurch gekennzeichnet, dass** das Netzwerkteil eingerichtet ist, Information über den Timeslot des Frame, in dem das Leistungsverhältnis gemessen werden soll, an das Endgerät zu senden.

16. Netzwerkteil nach Anspruch 10, **dadurch gekennzeichnet, dass** das Funksystem ein Funksystem ist, welches das CDMA Verfahren (CDMA = Code Division Multiple Access) benutzt, wobei die Übertragungen verschiedener Endgeräte in einem Timeslot auf Basis von den Endgeräten zugewiesenen individuellen Spreizcodes getrennt werden.

17. Netzwerkteil nach Anspruch 10, **dadurch gekennzeichnet, dass** die Uplink und Downlink Übertragungsrichtungen im Funksystem durch Zeitteilungsduplex (TDD) von einander getrennt werden.

18. Netzwerkteil nach Anspruch 10, **dadurch gekennzeichnet, dass**
das Netzwerkteil eingerichtet ist, einen Messbericht über das Signal-Interferenz-Verhältnis (SIR) vom Endgerät zu empfangen, betreffend alle Timeslots, in denen dem Endgerät eine Übertragungsleistung zugewiesen wird;
das Netzwerkteil eingerichtet ist, den vom Endgerät empfangenen Messbericht dazu zu benutzen, die Übertragungsleistung der Übertragung des nächsten zu sendenden und an das Endgerät gerichteten Frames zu bestimmen.

19. Funksystem, umfassend ein Netzwerkteil (100A bis 100D) und ein oder mehrere in Funkverbindung mit dem Netzwerkteil (100A bis 100D) stehende Endgeräte (102A bis 102F), wobei der Funkverkehr auf der Funkverbindung zwischen dem Netzwerkteil (100A bis 100D) und dem Endgerät (102A bis 102F) in einem Frame (300) übertragen wird, wobei das Netzwerkteil (100A bis 100D) eingerichtet ist, die Downlink Übertragungsleistung in mindestens zwei Timeslots (302A bis 302D) an ein gegebenes Endgerät (102A bis 102F) aufgrund von durch den Frame (300) bestimmten Timeslots (302A bis 302D) zuzuweisen,
**dadurch gekennzeichnet, dass**
das Netzwerkteil (100A bis 100D) eingerichtet ist, die Übertragungsleistung einer Übertragung an ein Endgerät (102A bis 102F) timeslotspezifisch zu erzeugen derart, dass das Leistungsverhältnis der Übertragungsleistung einer Funkübertragung an das Endgerät (102A bis 102F) in jedem Timeslot (302A bis 302D) zu der durch Übertragung an andere Endgeräte (102A bis 102F) verursachten Interferenzleistung einen für das Leistungsverhältnis im Timeslot (302A bis 302D) voreingestellten Schwellenwert überschreitet.

20. Funksystem nach Anspruch 19, **dadurch gekennzeichnet, dass** das Netzwerkteil umfasst: eine oder mehrere Basisstationen, eine oder mehrere Basisstationsteuerungen.

21. Funksystem nach Anspruch 19, **dadurch gekennzeichnet, dass** das Netzwerkteil eingerichtet ist, den für das Leistungsverhältnis eingestellten Schwellenwert aufgrund des in dem Timeslot zu sendenden Dienstes zu bestimmen.

22. Funksystem nach Anspruch 19, **dadurch gekennzeichnet, dass** das Netzwerkteil eingerichtet ist, den für das Leistungsverhältnis eingestellten Schwellenwert aufgrund der Dienstklasse des Endgeräts zu bestimmen.

23. Funksystem nach Anspruch 19, **dadurch gekennzeichnet, dass**:
das Endgerät eingerichtet ist, in einem Timeslot, in dem die Übertragungsleistung dem Endgerät zugewiesen wird,
die Signalstärke einer an das Endgerät gerichteten Übertragung und die Interferenzsignalstärke des Timeslots zu messen;
das Endgerät eingerichtet ist, das Signal-Interferenz-Verhältnis Signalstärke zu Interferenzsignalstärke zu messen;
das Endgerät eingerichtet ist, das Signal-Interferenz-Verhältnis mit einem voreingestellten Schwellenwert zu vergleichen, und wenn das Signal-Interferenz-Verhältnis mindestens gleich dem Schwellenwert ist, einen Leistungsanpassbefehl an das Netzwerkteil zu senden;
das Netzwerkteil eingerichtet ist, die
Übertragungsleistung von an das Endgerät adressierten Übertragungen aufgrund des Leistungsanpassbefehls in denjenigen Timeslots des nächsten Frames anzupassen, in denen die Übertragungsleistung dem Endgerät zugewiesen wird.

24. Funksystem nach Anspruch 23, **dadurch gekennzeichnet, dass** das Netzwerkteil eingerichtet ist, Information an das Endgerät zu senden, und das Endgerät eingerichtet ist, Information vom Netzwerkteil zu empfangen, die angibt, in welchem Timeslot das Signal-Interferenz-Verhältnis zu messen ist.

25. Funksystem nach Anspruch 19, **dadurch gekennzeichnet, dass** das Funksystem ein Funksystem ist, welches das CDMA Verfahren (CDMA = Code Division Multiple Access) benutzt, wobei die Übertragungen verschiedener Endgeräte in einem Timeslot auf Basis von den Endgeräten zugewiesenen individuellen Spreizcodes getrennt werden.

26. Funksystem nach Anspruch 19, **dadurch gekennzeichnet, dass** die Uplink und Downlink Übertragungsrichtungen im Funksystem durch Zeitteilungsduplex (TDD) von einander getrennt werden.

27. Funksystem nach Anspruch 19, **dadurch gekennzeichnet, dass** das Netzwerkteil eingerichtet ist, einen Messbericht über das Signal-Interferenz-Verhältnis (SIR) von dem Endgerät zu empfangen, betreffend diejenigen Timeslots in einem Frame, in dem die Übertragungsleistung dem Endgerät zugewiesen wird;
das Netzwerkteil eingerichtet ist, den vom Endgerät empfangenen Messbericht dazu zu benutzen, die Übertragungsleistung der Übertragung des nächsten zu sendenden und an das Endgerät gerichteten Frames zu bestimmen.

## Revendications

1. Procédé de réglage de puissance dans un système radio, procédé dans lequel (202 à 204) une transmission radio entre une partie de réseau dans le système radio et des terminaux localisés dans la zone de couverture de la partie de réseau est transmise dans une trame, une puissance de transmission en liaison descendante étant attribuée dans au moins deux intervalles de temps aux terminaux à partir d'intervalles de temps déterminés par ladite trame,
**caractérisé par** l'étape consistant à
produire (208 à 212) la puissance de transmission d'une transmission à un terminal, de façon spécifique à un intervalle de temps, de sorte que le rapport de puissance de la puissance de transmission d'une transmission radio au terminal dans chaque intervalle de temps et de la puissance de brouillage entraînée par des transmissions à d'autres terminaux dépasse une valeur de seuil établie sur le rapport de puissance dans l'intervalle de temps.

2. Procédé selon la revendication 1, **caractérisé en ce que** la partie de réseau comprend un ou plusieurs des éléments suivants : une ou plusieurs stations de base, un ou plusieurs contrôleurs de station de base.

3. Procédé selon la revendication 1, **caractérisé en ce que** la valeur de seuil établie sur le rapport de puissance est déterminée sur la base du service destiné à être envoyé dans l'intervalle de temps.

4. Procédé selon la revendication 1, **caractérisé en ce que** la valeur de seuil établie sur le rapport de puissance est déterminée sur la base de la classe de service du terminal.

5. Procédé selon la revendication 1, **caractérisé par** les étapes consistant à :
mesurer l'intensité de signal d'une transmission adressée à un terminal et l'intensité de signal brouilleur de l'intervalle de temps dans le terminal dans un intervalle de temps dans lequel une puissance de transmission est attribuée au terminal ;
créer le rapport signal utile/signal brouilleur de l'intensité de signal par rapport à l'intensité de signal brouilleur dans le terminal ;
comparer le rapport signal utile/signal brouilleur dans le terminal à une valeur de seuil préétablie, et, si le rapport signal utile/signal brouilleur est au moins égal à la valeur de seuil, envoyer une commande de réglage de puissance du terminal à la partie de réseau ;
régler la puissance de transmission de transmissions adressée au terminal dans la partie de réseau sur la base de la commande de réglage de puissance dans tous les intervalles de temps de la trame suivante dans lesquels une puissance de transmission est attribuée au terminal.

6. Procédé selon la revendication 5, **caractérisé par** l'étape consistant à envoyer des informations de la partie de réseau au terminal indiquant l'intervalle de temps dans lequel le rapport signal utile/signal brouilleur doit être mesuré.

7. Procédé selon la revendication 1, **caractérisé en ce que** le système radio est un système radio utilisant le procédé d'accès multiple par répartition en code (CDMA), dans lequel les transmissions de différents terminaux dans un intervalle de temps sont séparées sur la base de codes d'étalement individuels attribués aux terminaux.

8. Procédé selon la revendication 1, **caractérisé en ce que** les directions de transmission en liaison montante et liaison descendante sont séparées l'une de l'autre dans le système radio utilisant un duplexage par répartition dans le temps (TDD).

9. Procédé selon la revendication 1, **caractérisé par** les étapes consistant à
envoyer un rapport de mesure sur le rapport signal utile/signal brouilleur (SIR) du terminal à la partie de réseau concernant tous les intervalles de temps dans lesquels une puissance de transmission est attribuée au terminal ;
utiliser le rapport de mesure reçu à partir du terminal dans la partie de réseau dans la détermination de la puissance de transmission de la transmission de la trame destinée à être envoyée ensuite et dirigée vers le terminal.

10. Partie de réseau (100A à 100D) dans un système radio, agencée pour transmettre un trafic radio à des terminaux (102A à 102F) localisés dans la zone de couverture de la partie de réseau (100A à 100D) dans une trame (300), la partie de réseau (100A à 100D) étant agencée pour attribuer une puissance de transmission en liaison descendante dans au moins deux intervalles de temps (302A à 302D) à un terminal donné (102A) à partir d'intervalles de temps déterminés par ladite trame (300),
**caractérisé en ce que** :
la partie de réseau (100A à 100D) est agencée pour produire la puissance de transmission d'une transmission à un terminal (102A à 102F), de façon spécifique à un intervalle de temps, de sorte que le rapport de puissance de la puissance de transmission d'une transmission radio au terminal (102A à 102F) dans chaque intervalle de temps (302A à 302D) et de la puissance de brouillage entraînée par des transmissions à d'autres terminaux (102A à 102F) dépasse une valeur de seuil préétablie sur le rapport de puissance dans l'intervalle de temps (302A à 302D).

11. Partie de réseau selon la revendication 10, **caractérisée en ce que** la partie de réseau comprend un ou plusieurs des éléments suivants : une ou plusieurs stations de base, un ou plusieurs contrôleurs de station de base.

12. Partie de réseau selon la revendication 10, **caractérisée en ce que** la partie de réseau est agencée pour déterminer la valeur de seuil établie sur le rapport de puissance sur la base du service destiné à être envoyé dans l'intervalle de temps.

13. Partie de réseau selon la revendication 10, **caractérisée en ce que** la partie de réseau est agencée pour déterminer la valeur de seuil établie sur le rapport de puissance sur la base de la classe de service du terminal.

14. Partie de réseau selon la revendication 10, **caractérisée en ce que** :
la partie de réseau est agencée pour recevoir une commande de réglage de puissance à partir du terminal, relative à un tel intervalle de temps dans lequel une puissance de transmission est attribuée au terminal ;
la partie de réseau est agencée pour utiliser la commande de réglage de puissance pour régler la puissance de transmission de transmissions dirigées vers le terminal dans tous les intervalles de temps de la trame suivante dans lesquelles une puissance de transmission est attribuée au terminal.

15. Partie de réseau selon la revendication 14, **caractérisée en ce que** la partie de réseau est agencée pour envoyer des informations au terminal concernant l'intervalle de temps de la trame dans lequel le rapport de puissance sera mesuré.

16. Partie de réseau selon la revendication 10, **caractérisée en ce que** le système radio est un système radio utilisant le procédé d'accès multiple par répartition en code, dans laquelle les transmissions de différents terminaux dans un intervalle de temps sont séparées sur la base de codes d'étalement individuels attribuée aux terminaux.

17. Partie de réseau selon la revendication 10, **caractérisée en ce que** les directions de transmission en liaison montante et liaison descendante sont séparées l'une de l'autre dans le système radio utilisant un duplexage par répartition dans le temps (TDD).

18. Partie de réseau selon la revendication 10, **caractérisée en ce que** la partie de réseau est agencée pour recevoir un rapport de mesure sur le rapport signal utile/signal brouilleur (SIR) à partir du terminal concernant tous les intervalles de temps dans lesquels une puissance de transmission est attribuée au terminal ;
la partie de réseau est agencée pour utiliser le rapport de mesure reçu à partir du terminal dans la détermination de la puissance de transmission de la transmission de la trame destinée à être envoyée ensuite et dirigée vers le terminal.

19. Système radio comprenant une partie de réseau (100A à 100D) et un ou plusieurs terminaux (102A à 102F) en connexion radio avec la partie de réseau (100A à 100D), un trafic radio sur la connexion radio entre la partie de réseau (100A à 100D) et le terminal (102A à 102F) étant transmis dans une trame (300), la partie de réseau (100A à 100D) étant agencée pour attribuer une puissance de transmission en liaison descendante dans au moins deux intervalles de temps (302A à 302D) à un terminal donné (102A à 102F) à partir d'intervalles de temps (302A à 302D) déterminés par ladite trame (300), **caractérisé en ce que** :
la partie de réseau (100A à 100D) est agencée pour produire la puissance de transmission d'une transmission à un terminal (102A à 102F), de façon spécifique à un intervalle de temps, de sorte que le rapport de puissance de la puissance de transmission d'une transmission radio au terminal (102A à 102F) dans chaque intervalle de temps (302A à 302D) et de la puissance de brouillage entraînée par des transmissions à d'autres terminaux (102A à 102F) dépasse une valeur de seuil préétablie sur le rapport de puissance dans l'intervalle de temps (302A à 302D).

20. Système radio selon la revendication 19, **caractérisé en ce que** la partie de réseau comprend un ou plusieurs des éléments suivants : une ou plusieurs stations de base, un ou plusieurs contrôleurs de station de base.

21. Système radio selon la revendication 19, **caractérisé en ce que** la partie de réseau est agencée pour déterminer la valeur de seuil établie sur le rapport de puissance sur la base du service destiné à être envoyé dans l'intervalle de temps.

22. Système radio selon la revendication 19, **caractérisé en ce que** la partie de réseau est agencée pour déterminer la valeur de seuil établie sur le rapport de puissance sur la base de la classe de service du terminal.

23. Système radio selon la revendication 19, **caractérisé en ce que** :
le terminal est agencé pour mesurer, dans un intervalle de temps dans lequel une puissance de transmission est attribuée au terminal, l'intensité de signal d'une transmission dirigée vers le terminal et l'intensité de signal brouilleur de l'intervalle de temps ;
le terminal est agencé pour mesurer le rapport signal utile/signal brouilleur de l'intensité de signal par rapport à l'intensité de signal brouilleur ;
le terminal est agencé pour comparer le rapport signal utile/signal brouilleur à une valeur de seuil préétablie, et, si le rapport signal utile/signal brouilleur est au moins égal à la valeur de seuil, pour envoyer une commande de réglage de puissance à la partie de réseau ;
la partie de réseau est agencée pour régler la puissance de transmission de transmissions adressées au terminal sur la base de la commande de réglage de puissance dans tous les intervalles de temps de la trame suivante dans lesquels une puissance de transmission est attribuée au terminal.

24. Système radio selon la revendication 23, **caractérisé en ce que** la partie de réseau est agencée pour envoyer des informations au terminal et le terminal est agencé pour recevoir des informations à partir de la partie de réseau indiquant l'intervalle de temps dans lequel le rapport signal utile/signal brouilleur doit être mesuré.

25. Système radio selon la revendication 19, **caractérisé en ce que** le système radio est un système radio utilisant le procédé d'accès multiple par répartition en code, dans lequel les transmissions de différents terminaux dans un intervalle de temps sont séparées sur la base de codes d'étalement individuels attribuée aux terminaux.

26. Système radio selon la revendication 19, **caractérisé en ce que** les directions de transmission en liaison montante et liaison descendante sont séparées l'une de l'autre dans le système radio utilisant un duplexage par répartition dans le temps (TDD).

27. Système radio selon la revendication 19, **caractérisé en ce que** la partie de réseau est agencée pour recevoir un rapport de mesure sur le rapport signal utile/signal brouilleur (SIR) à partir du terminal concernant tous les intervalles de temps dans une trame dans lesquels une puissance de transmission est attribuée au terminal ;
la partie de réseau est agencée pour utiliser le rapport de mesure reçu à partir du terminal dans la détermination de la puissance de transmission de la transmission de la trame destinée à être envoyée ensuite et dirigée vers le terminal.
